# EUROPÄISCHE PATENTSCHRIFT

(11) **EP 4 168 265 B1**
(45) Veröffentlichungstag und Bekanntmachung des Hinweises auf die Patenterteilung: **03.07.2024**
(21) Anmeldenummer: 21715130.7
(22) Anmeldetag: 01.03.2021
(51) Int. Cl.: B60K 31/00, B60W 30/16, B60W 50/14, B60W 50/16

(54) **VERFAHREN UND FAHRERASSISTENZSYSTEM ZUM BETREIBEN EINES EINSPURIGEN ODER MEHRSPURIGEN FAHRZEUGS**
METHOD AND DRIVER ASSISTANCE SYSTEM FOR OPERATING A SINGLE-TRACK OR MULTI-TRACK VEHICLE
PROCÉDÉ ET SYSTÈME D'ASSISTANCE AU CONDUCTEUR POUR LA CONDUITE D'UN VÉHICULE À VOIE UNIQUE OU À VOIES MULTIPLES

(30) Priorität: 17.06.2020 DE 102020207502
(43) Veröffentlichungstag der Anmeldung: 26.04.2023
(73) Patentinhaber: Robert Bosch GmbH, 70469 Stuttgart (DE)
(72) Erfinder: SCHOENHERR, Michael, 71272 Renningen-Malmsheim (DE); SCHORI, Thorsten, 70193 Stuttgart (DE); GRELAUD, Mathieu, 71638 Ludwigsburg (DE)
(86) Internationale Anmeldenummer: PCT/DE2021/100205
(87) Internationale Veröffentlichungsnummer: WO 2021/254553

(56) Entgegenhaltungen:
- EP-A1- 1 419 924
- US-A1- 2003 038 714
- US-A1- 2005 150 701

## Beschreibung

### Gebiet der Erfindung

Die Erfindung betrifft ein Verfahren zum Betreiben eines einspurigen oder mehrspurigen Fahrzeugs sowie ein entsprechendes Fahrerassistenzsystem.

### Stand der Technik

Ein Fahrzeug kann Fahrerassistenzsysteme aufweisen. Beispielsweise kann das Fahrzeug ein als Tempomat bezeichnetes Fahrerassistenzsystem aufweisen, das eine Geschwindigkeit des Fahrzeugs innerhalb eines Toleranzbereichs um einen von einem Fahrer des Fahrzeugs vorgegebenen Zielgeschwindigkeitswert einregelt.

Der Tempomat kann als abstandsgeregelter Tempomat ausgeführt sein. Dann kann die Geschwindigkeit so lange auf den Zielgeschwindigkeitswert geregelt werden, bis ein vorausfahrendes Fahrzeug durch ein Sensorsystem des Fahrzeugs erfasst wird und das vorausfahrende Fahrzeug in einem kleineren Abstand als ein wählbarer Zielabstand dem Fahrzeug vorausfährt. Dann wird eine Leistungsabgabe des Fahrzeugs gedrosselt, bis das Fahrzeug innerhalb eines Toleranzbereichs um den Zielabstand dem vorausfahrenden Fahrzeug hinterherfährt. Der abstandsgeregelte Tempomat kann auch ein Bremssystem des Fahrzeugs ansteuern, um den Abstand innerhalb des Toleranzbereichs zu halten.

Ferner ist aus der US 2003/038714 A1 ein Verfahren zur adaptiven Abstandsregelung bekannt, bei welchem eine Geschwindigkeit indirekt durch einen Fahrer geregelt wird, indem beispielsweise mittels eines Schalters eine Zielgeschwindigkeit gewählt wird.

Ähnliche Verfahren sind zudem aus der EP 1 419 924 A1 sowie der US 2005/150701 A1 bekannt.

### Offenbarung der Erfindung

Vor diesem Hintergrund werden mit dem hier vorgestellten Ansatz ein Verfahren zum Betreiben eines einspurigen oder mehrspurigen Fahrzeugs und ein entsprechendes Fahrerassistenzsystem, sowie schließlich ein entsprechendes Computerprogrammprodukt und ein maschinenlesbares Speichermedium gemäß den unabhängigen Ansprüchen vorgestellt. Vorteilhafte Weiterbildungen und Verbesserungen des hier vorgestellten Ansatzes ergeben sich aus der Beschreibung und sind in den abhängigen Ansprüchen beschrieben.

### Vorteile der Erfindung

Ausführungsformen der vorliegenden Erfindung können in vorteilhafter Weise ermöglichen, dass ein Fahrer eines einspurigen oder mehrspurigen Fahrzeugs ein Fahrpedal beziehungsweise Gaspedal oder einen Fahr-Drehgriff beziehungsweise Gasgriff des Fahrzeugs wie gewohnt verwenden kann, um eine Geschwindigkeit des Fahrzeugs zu kontrollieren, bis sich das Fahrzeug einem vorausfahrenden Fahrzeug annähert oder sich die Geschwindigkeit an eine vom Fahrer gewählte Zielgeschwindigkeit annähert.

Wenn das Fahrzeug bei einem aktuell von dem Fahrer eingestellten Fahrpedalwinkel oder einer aktuell von dem Fahrer eingestellten Griffstellung einen Abstand zu dem vorausfahrenden Fahrzeug unter einen Zielabstand verringern würde, dann wird das Fahrzeug durch einen Systemeingriff verlangsamt, bis der Zielabstand eingehalten wird. Der Fahrer kann den Zielabstand dabei innerhalb eines geschwindigkeitsabhängigen Pufferbereichs durch den Fahrpedalwinkel oder die Griffstellung beeinflussen.

Wenn das Fahrzeug bei dem aktuell von dem Fahrer eingestellten Fahrpedalwinkel oder der aktuell von dem Fahrer eingestellten Griffstellung schneller als die Zielgeschwindigkeit fahren würde, dann wird das Fahrzeug ebenfalls durch einen Systemeingriff abgebremst, bis die Zielgeschwindigkeit eingehalten wird. Der Fahrer kann die Zielgeschwindigkeit dabei innerhalb eines systembedingten Geschwindigkeitsbereichs frei wählen. Die Zielgeschwindigkeit kann durch ein energisches Treten des Fahrpedals oder Drehen des Fahr-Drehgriffs überschritten werden. Der Fahrer kann auch keine Zielgeschwindigkeit wählen. Auch der systembedingte Geschwindigkeitsbereich kann durch energisches Treten des Fahrpedals oder Drehen des Fahr-Drehgriffs überschritten werden. Der Fahrer wird jedoch vor Verlassen des Geschwindigkeitsbereichs gewarnt, da die Abstandsregelung oberhalb des Geschwindigkeitsbereichs systembedingt deaktiviert ist oder eingeschränkt funktionsfähig sein kann.

Es wird ein Verfahren zum Betreiben eines einspurigen oder mehrspurigen Fahrzeugs vorgeschlagen, wobei eine Geschwindigkeit des Fahrzeugs und ein Abstand des Fahrzeugs zu einem vorausfahrenden Fahrzeug geregelt werden, wobei die Geschwindigkeit innerhalb eines systembedingten Geschwindigkeitsbereichs unter Verwendung einer Stellung eines Bedienelements des Fahrzeugs geregelt wird und bis zu einer innerhalb des Geschwindigkeitsbereichs wählbaren optionalen Zielgeschwindigkeit geregelt wird, wobei vor einem Überschreiten einer Obergrenze des Geschwindigkeitsbereichs ein Warnsignal für einen Fahrer des Fahrzeugs bereitgestellt wird, wobei der Abstand innerhalb des Geschwindigkeitsbereichs in einem geschwindigkeitsabhängigen Abstandspufferbereich in Abhängigkeit von der Stellung geregelt wird.

Ideen zu Ausführungsformen der vorliegenden Erfindung können unter anderem als auf den nachfolgend beschriebenen Gedanken und Erkenntnissen beruhend angesehen werden.

Ein Fahrzeug kann beispielsweise ein PKW, LKW, Motorrad oder Quad sein. Der PKW und der LKW können als Bedienelement ein Fahrpedal oder Gaspedal aufweisen. Das Motorrad kann als Bedienelement einen Fahr-Drehgriff oder Gasgriff aufweisen. Das Quad kann als Bedienelement einen Fahrhebel oder Gashebel aufweisen. Eine Stellung des Bedienelements kann also ein Fahrpedalwinkel, eine Griffstellung oder eine Hebelstellung sein.

Das Fahrzeug kann ein Sensorsystem zum Erfassen eines Erfassungsbereichs insbesondere vor dem Fahrzeug aufweisen. Das Sensorsystem kann beispielsweise radarbasiert, lidarbasiert oder kamerabasiert sein. Wenn ein anderes Fahrzeug in dem Erfassungsbereich vor dem Fahrzeug fährt, kann das Sensorsystem einen Abstand zwischen den beiden Fahrzeugen erfassen. Eine Information über den Abstand kann für zumindest ein Fahrerassistenzsystem des Fahrzeugs bereitgestellt werden. Ein systembedingter Geschwindigkeitsbereich kann eine Obergrenze und eine Untergrenze aufweisen. Der systembedingte Geschwindigkeitsbereich kann abhängig von Eigenschaften des Fahrzeugs und in dem Fahrzeug aufgenommenen Komponenten definiert sein. Die Obergrenze kann beispielsweise durch eine Leistungsfähigkeit des Sensorsystems bestimmt sein. Beispielsweise kann eine Sensorreichweite zumindest eines Sensors des Sensorsystems die Obergrenze festlegen. Die Untergrenze kann beispielsweise ein Stillstand des Fahrzeugs sein.

Eine Zielgeschwindigkeit kann fakultativ von einem Fahrer des Fahrzeugs vorgegeben werden. Beispielsweise kann die Zielgeschwindigkeit über die Pedalstellung des PKW, die Griffstellung des Motorrads oder die Hebelstellung des Quads eingestellt werden und dann abgespeichert werden. Die Zielgeschwindigkeit kann beispielsweise über eine Schnittstelle des Fahrerassistenzsystems eingestellt und wieder gelöscht werden. Die Schnittstelle kann beispielsweise als Hebel, Tasten oder Touch-Bedienfläche ausgeführt sein. Die Zielgeschwindigkeit kann auch in festgelegten Schritten oder Intervallen erhöht beziehungsweise gesenkt werden. Ebenso kann die Zielgeschwindigkeit auf vorab gespeicherte Werte gesetzt werden. Die Zielgeschwindigkeit kann auch durch eine Schildererkennung des Fahrzeugs vorgegeben werden. Unterhalb der Zielgeschwindigkeit kann der Fahrer die Geschwindigkeit des Fahrzeugs durch das Bedienelement bestimmen. Die Zielgeschwindigkeit bleibt vorzugsweise aktiv, auch wenn der Fahrer ein Bremspedal des Fahrzeugs tritt oder einen Bremsgriff zieht.

Ein Abstandspufferbereich kann zwischen dem Fahrzeug und dem vorausfahrenden Fahrzeug angeordnet sein. Der Abstandspufferbereich kann bei hohen Geschwindigkeiten weiter von dem vorausfahrenden Fahrzeug entfernt sein als bei niedrigen Geschwindigkeiten. Je weiter der Fahrer das Fahrpedal durchdrückt oder den Fahr-Drehgriff aufdreht, wenn sich das Fahrzeug innerhalb des Abstandspufferbereichs aufhält, umso näher fährt das Fahrzeug auf das vorausfahrende Fahrzeug auf. Der Abstandspufferbereich kann wirken wie ein virtuelles Luftkissen zwischen den Fahrzeugen. Je weiter der Fahrer das Fahrpedal durchtritt oder den Fahr-Drehgriff aufdreht, umso weiter wird das Luftkissen komprimiert, und umgekehrt. Ein minimaler geschwindigkeitsabhängiger Sicherheitsabstand zu dem vorausfahrenden Fahrzeug wird dabei immer mindestens eingehalten.

Wenn das Fahrzeug innerhalb des Abstandspufferbereichs fährt und das vorausfahrende Fahrzeug bremst, wird das Fahrzeug ebenso unter Verwendung seines Antriebs und/oder seiner Bremsen abgebremst, um den über das Bedienelement eingestellten Abstand geschwindigkeitsabhängig einzuhalten.

Bevor das Fahrzeug schneller als die Obergrenze des Geschwindigkeitsbereichs fährt, wird der Fahrer mittels eines Warnsignals gewarnt, da oberhalb der Obergrenze der Abstand nicht mehr sicher geregelt werden kann.

Vor Überschreiten der Zielgeschwindigkeit kann ebenfalls das Warnsignal bereitgestellt werden. Die Zielgeschwindigkeit ist keine harte Grenze und kann übertreten werden. Dabei kann jedoch beispielsweise eine momentan geltende Geschwindigkeitsbeschränkung überschritten werden, was auf eigene Gefahr des Fahrers passiert.

Als Warnsignal kann eine sichtbare Anzeige für den Fahrer bereitgestellt werden. Beispielsweise kann eine Warnleuchte aktiviert werden. Ebenso kann auch ein Warnsymbol in ein Blickfeld des Fahrers eingeblendet werden.

Als Warnsignal kann eine Änderung einer Fahrzeugcharakteristik des Fahrzeugs eingestellt werden. Die Fahrzeugcharakteristik des Fahrzeugs kann eine von dem Fahrer wahrnehmbare Eigenschaft des Fahrzeugs sein. Das Fahrzeug kann beispielsweise einen Beschleunigungsruck ausführen. Der Beschleunigungsruck kann dabei positiv oder negativ sein. Ebenso kann die Warnung über eine Vibration des Bedienelements, des Lenkrads oder des Sitzes übermittelt werden.

Als Änderung der Fahrzeugcharakteristik kann ein Widerstand des Bedienelements erhöht werden. Durch den erhöhten Widerstand ist eine höhere Kraft notwendig, um den Widerstand zu überwinden. Der erhöhte Widerstand kann kurzzeitig aufrechterhalten werden. Ebenso kann der erhöhte Widerstand aufrechterhalten werden, solange das Fahrzeug mit einer Geschwindigkeit oberhalb der Obergrenze fährt.

Als Änderung der Fahrzeugcharakteristik kann eine Nichtannahme einer Änderung der Stellung des Bedienelements eingestellt werden. Bei einer Nichtannahme kann das Fahrpedal stärker durchgetreten oder der Fahr-Drehgriff aufgedreht werden, ohne dass der Antrieb mehr Leistung bereitstellt, d.h. die Änderung der Stellung durch den Fahrer wird von dem Fahrzeug quasi ignoriert. Umgekehrt kann der Antrieb die abgegebene Leistung unmittelbar verringern, wenn das Fahrpedal weniger stark durchgetreten oder der Fahr-Drehgriff weniger stark aufgedreht wird. Die Nichtannahme kann durch einen Kick-down übertreten werden.

Die Zielgeschwindigkeit und/oder die Obergrenze kann überschritten werden, wenn ein Stellungsgradient größer als ein Übertrittwert ist. Ein Stellungsgradient repräsentiert eine Bewegungsgeschwindigkeit des Bedienelements. Der Stellungsgradient kann also ein Fahrpedalwinkelgradient oder ein Fahr-Drehgriffwinkelgradient sein. Bei einem hohen Stellungsgradient wird das Bedienelement schnell bedient. Der hohe Stellungsgradient kann beispielsweise in einer besonderen Situation verwendet werden, wenn der Fahrer die Zielgeschwindigkeit und/oder die Obergrenze bewusst überschreiten will.

Die Obergrenze kann in Abhängigkeit von einem Systemzustand des Fahrerassistenzsystems eingestellt werden. Das Fahrerassistenzsystem kann beispielsweise die Obergrenze absenken, wenn eine Erkennungsleistung des Sensorsystems nachlässt. Dann könnte beispielsweise das vorausfahrende Fahrzeug zu spät erkannt werden. Ebenso kann die Obergrenze abgesenkt werden, wenn Räder des Fahrzeugs an Bodenhaftung verlieren. Dann kann eine Bremsleistung des Fahrzeugs verschlechtert sein und der Sicherheitsabstand nicht eingehalten werden. Beispielsweise kann die Obergrenze bei Niederschlag abgesenkt werden, um einen sicheren Betrieb des Fahrzeugs zu gewährleisten. Ebenso kann die Obergrenze abgesenkt werden, wenn das Fahrzeug auf losem oder glattem Untergrund fährt.

Das Verfahren kann beispielsweise in Software oder Hardware oder in einer Mischform aus Software und Hardware beispielsweise in einem Steuergerät implementiert sein.

Der hier vorgestellte Ansatz schafft ferner ein Fahrerassistenzsystem, das dazu ausgebildet ist, um die Schritte einer Variante des hier vorgestellten Verfahrens in entsprechenden Einrichtungen durchzuführen, anzusteuern bzw. umzusetzen.

Das Fahrerassistenzsystem kann ein elektrisches Gerät mit zumindest einer Recheneinheit zum Verarbeiten von Signalen oder Daten, zumindest einer Speichereinheit zum Speichern von Signalen oder Daten, und zumindest einer Schnittstelle und/oder einer Kommunikationsschnittstelle zum Einlesen oder Ausgeben von Daten, die in ein Kommunikationsprotokoll eingebettet sind, sein. Die Recheneinheit kann beispielsweise ein Signalprozessor, ein sogenannter System-ASIC oder ein Mikrocontroller zum Verarbeiten von Sensorsignalen und Ausgeben von Datensignalen in Abhängigkeit von den Sensorsignalen sein. Die Speichereinheit kann beispielsweise ein Flash-Speicher, ein EPROM oder eine magnetische Speichereinheit sein. Die Schnittstelle kann als Sensorschnittstelle zum Einlesen der Sensorsignale von einem Sensor und/oder als Aktorschnittstelle zum Ausgeben der Datensignale und/oder Steuersignale an einen Aktor ausgebildet sein. Die Kommunikationsschnittstelle kann dazu ausgebildet sein, die Daten drahtlos und/oder leitungsgebunden einzulesen oder auszugeben. Die Schnittstellen können auch Softwaremodule sein, die beispielsweise auf einem Mikrocontroller neben anderen Softwaremodulen vorhanden sind.

Von Vorteil ist auch ein Computerprogrammprodukt oder Computerprogramm mit Programmcode, der auf einem maschinenlesbaren Träger oder Speichermedium wie einem Halbleiterspeicher, einem Festplattenspeicher oder einem optischen Speicher gespeichert sein kann und zur Durchführung, Umsetzung und/oder Ansteuerung der Schritte des Verfahrens nach einer der vorstehend beschriebenen Ausführungsformen verwendet wird, insbesondere wenn das Programmprodukt oder Programm auf einem Computer oder einem Fahrerassistenzsystem ausgeführt wird.

### Kurze Beschreibung der Zeichnung

Nachfolgend werden Ausführungsformen der Erfindung unter Bezugnahme auf die beigefügte Zeichnung beschrieben, wobei weder die Zeichnung noch die Beschreibung als die Erfindung einschränkend auszulegen sind.

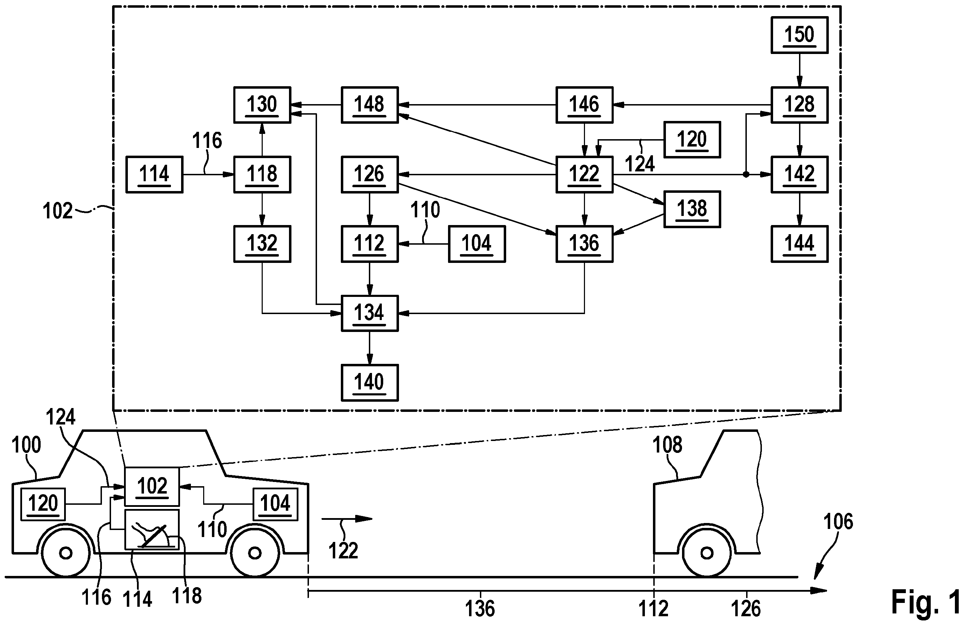

Fig. 1 zeigt eine Darstellung eines Fahrzeugs mit einem Fahrerassistenzsystem gemäß einem Ausführungsbeispiel.

Die Figur ist lediglich schematisch und nicht maßstabsgetreu. Gleiche Bezugszeichen bezeichnen in der Figur gleiche oder gleichwirkende Merkmale.

### Ausführungsformen der Erfindung

Fig. 1 zeigt eine Darstellung eines Fahrzeugs 100 mit einem Fahrerassistenzsystem 102 gemäß einem Ausführungsbeispiel. Das Fahrzeug 100 ist hier ein PKW. Der hier vorgestellte Ansatz kann entsprechend auch bei einem Motorrad, einem LKW oder auch einem Vierradmotorrad beziehungsweise Quad verwendet werden. Das Fahrzeug 100 weist ein Sensorsystem 104 zum Erfassen anderer Fahrzeuge zumindest in Fahrtrichtung vor dem Fahrzeug 100 auf. Die anderen Fahrzeuge können bis zu einer Sensorreichweite 106 des Sensorsystems 104 erfasst werden. Die Sensorreichweite 106 ist spezifisch für das Sensorsystem 104. Die Sensorreichweite 106 ist ferner abhängig von Umweltbedingungen. Beispielsweise ist die Sensorreichweite 106 bei Regen geringer als ohne Regen.

Wenn das Sensorsystem 104 ein dem Fahrzeug 100 vorausfahrendes Fahrzeug 108 erfasst, wird eine Abstandsinformation 110 bereitgestellt, die einen Abstand 112 zwischen dem Fahrzeug 100 und dem vorausfahrenden Fahrzeug 108 abbildet.

Ein Bedienelement 114 des Fahrzeugs 100 stellt ein Bedienelementsignal 116 bereit. Das Bedienelementsignal 116 bildet eine momentane Stellung 118 des Bedienelements 114 ab. Hier stellt ein Fahrpedal 114 des PKW ein Fahrpedalsignal 116 bereit. Das Fahrpedalsignal 116 bildet einen momentanen Fahrpedalwinkel 118 des Fahrpedals 114 ab.

Ein Geschwindigkeitssensor 120 des Fahrzeugs 100 bildet eine aktuelle Geschwindigkeit 122 des Fahrzeugs 100 in einem Geschwindigkeitssignal 124 ab.

Das Fahrerassistenzsystem 102 liest das Bedienelementsignal 116, das Geschwindigkeitssignal 124 und die Abstandsinformation 110 ein.

Solange der Abstand 112 größer als ein geschwindigkeitsabhängiger Abstandsgrenzwert 126 ist und die Geschwindigkeit 122 innerhalb eines systembedingten Geschwindigkeitsbereichs 128 liegt, wird die Stellung 118 direkt in einen Beschleunigungssollwert 130 umgesetzt. Ein Fahrer des Fahrzeugs 100 kann die Geschwindigkeit 122 also wie gewohnt über das Bedienelement 114 steuern.

Wenn der Abstand 112 kleiner als der geschwindigkeitsabhängige Abstandsgrenzwert 126 ist und die Geschwindigkeit 122 innerhalb des systembedingten Geschwindigkeitsbereichs 128 liegt, wird die Stellung 118 in einen Zielabstand 132 für einen Abstandsregler 134 des Fahrerassistenzsystems 102 umgesetzt. Der Zielabstand 132 kann innerhalb eines Abstandspufferbereichs 136 eingestellt werden. Der Abstandspufferbereich 136 beginnt an dem geschwindigkeitsabhängigen Abstandsgrenzwert 126 und endet an einem geschwindigkeitsabhängigen Sicherheitsabstand 138 zu dem vorausfahrenden Fahrzeug 108. Der Abstandsregler 134 regelt den Beschleunigungssollwert 130 beziehungsweise einen Bremssollwert 140 unter Verwendung des Abstands 112 und des Zielabstands 132.

Wenn die Geschwindigkeit 122 eine Obergrenze 142 des Geschwindigkeitsbereichs 128 überschreiten würde, wird der Fahrer durch ein Warnsignal 144 gewarnt, da die Sensorreichweite 106 des Sensorsystems 104 oberhalb der Obergrenze 142 nicht ausreicht, um die Abstandsinformation 110 zuverlässig bereitzustellen.

Der Fahrer kann innerhalb des Geschwindigkeitsbereichs 128 optional eine Zielgeschwindigkeit 146 für einen Geschwindigkeitsregler 148 des Fahrerassistenzsystems 102 setzen. Wenn der Abstand 112 größer als der geschwindigkeitsabhängige Abstandsgrenzwert 126 ist und die Geschwindigkeit 122 kleiner als die Zielgeschwindigkeit 146 ist, wird die Stellung 118 direkt in den Beschleunigungssollwert 130 umgesetzt. Wenn die Geschwindigkeit 122 die Zielgeschwindigkeit 146 erreicht beziehungsweise kurz bevor die Zielgeschwindigkeit 146 erreicht wird, regelt der Geschwindigkeitsregler 148 den Beschleunigungssollwert 130 ab.

Wenn der Abstand 112 innerhalb des Abstandspufferbereichs 136 liegt und die Geschwindigkeit 122 kleiner als die Zielgeschwindigkeit 146 ist, wird die Stellung 118 in den Zielabstand 132 umgesetzt. Wenn die Geschwindigkeit 122 die Zielgeschwindigkeit 146 erreicht beziehungsweise kurz bevor die Zielgeschwindigkeit 146 erreicht wird, regelt der Geschwindigkeitsregler 148 den Beschleunigungssollwert 130 ab, auch wenn dadurch der Abstand 112 größer als der Zielabstand 132 wird.

Da die Abstandsregelung abhängig von den Umweltbedingungen ist, wird in einem Ausführungsbeispiel die Obergrenze 142 abgesenkt, wenn sich die Umweltbedingungen verschlechtern. Dazu liest das Fahrerassistenzsystem eine die Umweltbedingungen abbildende Umweltinformation 150 ein und passt die Obergrenze 142 an die Umweltbedingungen an.

Mit anderen Worten wird eine automatische Aktivierung eines Speedlimiters beschrieben.

In Fahrzeugen gibt es unterschiedliche Fahrerassistenzsysteme, die dem Fahrer erhöhten Komfort und mehr Sicherheit bieten, wie z.B. Adaptive Cruise Control (ACC) und Highway Assist (HWA). Darüber hinaus bieten weitere Assistenzsysteme einen Sicherheitsgewinn durch Abstandswarnungen und Notbremseingriffe.

Eine weitere, fahrerorientierte Assistenzfunktion "Dynamic Distance Assist" (DDA) nimmt dem Fahrer vor allem das Bremsen per Pedal in weiten Teilen ab, überlässt ihm aber das Gaspedal.

Für einen Abstands-Limiter oder auch für DDA bietet sich die Möglichkeit, als Ergänzung einen Speed-Limiter oder ACC zu aktivieren. So kann nicht nur sichergestellt werden, dass ein Mindestabstand gewährleistet wird, sondern auch eine vorgegebene Maximalgeschwindigkeit gehalten wird.

Aktuelle ACC-Systeme haben dabei unterschiedliche Maximal-Geschwindigkeiten (z.B. 160 km/h, 210 km/h oder auch 250 km/h), die voreingestellt werden können. So wird sichergestellt, dass ACC in einem Geschwindigkeitsbereich genutzt wird, indem es seine gewünschte und bekannte Performance erreicht. Es ist für den Fahrer kontrollierbar.

Für abstandseinhaltende Funktionen, wie Distance-Limiter oder DDA stellt sich die Frage, wie der Fahrer insbesondere im Sportwagenbereich bei höheren Geschwindigkeiten auf die Systemgrenzen aufmerksam gemacht werden kann, wenn er selbst per Fahrpedal die Geschwindigkeit vorgibt

Bei dem hier vorgestellten Ansatz wird bei Aktivierung des Abstands-Limiters oder auch DDA automatisch eine Geschwindigkeitsobergrenze (v-max) aktiviert. So wird dem Fahrer bewusst, dass er sich bei Nutzung dieser Assistenzfunktionen nur in einem bestimmten Geschwindigkeitsbereich auf die gewünschte Performance verlassen kann.

Zusätzlich zur automatischen Aktivierung einer Geschwindigkeitsobergrenze wird hier ein zweistufiger Limiter vorgestellt.

Das erste Geschwindigkeitslimit ist ähnlich zu bisher bekannten Speed-Limitern. Es kann z.B. auf 50 km/h für Stadtsituationen oder auch auf 120 km/h für Autobahnsituationen eingestellt werden. Aktivierungsbedingungen, Funktionsverhalten und Deaktivierungsbedingungen könne dabei sein wie bekannt.

Das zweite Geschwindigkeitslimit ist für die Berücksichtigung der SensorPerformance ausgelegt (z.B. 160 km/h, 210 km/h, 250 km/h). Das zweite Geschwindigkeitslimit kann gegebenenfalls etwas höher als für ACC sein, da der Fahrer durch die Nutzung des Gaspedals aktiv im Fahrgeschehen ist. Das zweite Geschwindigkeitslimit kann bei Aktivierung des Distance Limiters oder DDA automatisch aktiviert werden. Das zweite Geschwindigkeitslimit kann nicht beziehungsweise nicht einfach und/oder nicht während der Fahrt per Bedieneinrichtung geändert werden, da es die Sensorperformance betrifft.

In einem Ausführungsbeispiel ist es aber in bestimmten Bereichen variabel und kann den Umgebungsbedingungen angepasst werden. So kann z.B. bei starkem Regen die Geschwindigkeitsobergrenze angepasst werden. Die obere Grenze wird dabei nicht durch das Setzen eines normalen/unteren Geschwindigkeitslimits ersetzt oder deaktiviert. Auch bei Deaktivierung des unteren Geschwindigkeitslimits bleibt das obere bestehen.

Möchte der Fahrer dennoch die Geschwindigkeit über das obere Limit erhöhen, so kann er dies durch eine Deaktivierung des Distance Limiters oder DDA per Bedieneinrichtung erreichen. Er kann auch eine temporäre Deaktivierung durch einen sehr hohen Fahrpedalwinkel oder einen Kick-Down vornehmen. Vorteilhafterweise wird der Fahrer bei Annäherung an die Geschwindigkeitsobergrenze früh genug darauf hingewiesen, sodass er das obere Limit bei Bedarf rechtzeitig überstimmen kann. Das obere Geschwindigkeitslimit kann auch in Fahrzeugen ohne einen einstellbaren, bekannten Speed- Limiter genutzt werden.

Abschließend ist darauf hinzuweisen, dass Begriffe wie "aufweisend", "umfassend", etc. keine anderen Elemente oder Schritte ausschließen und Begriffe wie "eine" oder "ein" keine Vielzahl ausschließen. Bezugszeichen in den Ansprüchen sind nicht als Einschränkung anzusehen.

## Patentansprüche

1. Verfahren zum Betreiben eines einspurigen oder mehrspurigen Fahrzeugs (100) mit einem Fahrerassistenzsystem (102), wobei eine Geschwindigkeit (122) des Fahrzeugs (100) und ein Abstand (112) des Fahrzeugs (100) zu einem vorausfahrenden Fahrzeug (108) geregelt werden, wobei die Geschwindigkeit (122) innerhalb eines systembedingten Geschwindigkeitsbereichs (128) des Fahrerassistenzsystems (102) unter Verwendung einer Stellung (118) eines Bedienelements (114) des Fahrzeugs (100) geregelt wird und bis zu einer innerhalb des Geschwindigkeitsbereichs (128) wählbaren optionalen Zielgeschwindigkeit (146) geregelt wird, wobei vor einem Überschreiten einer Obergrenze (142) des Geschwindigkeitsbereichs (128) ein Warnsignal (144) für einen Fahrer des Fahrzeugs (100) bereitgestellt wird, wobei der Abstand (112) innerhalb des Geschwindigkeitsbereichs (128) in einem geschwindigkeitsabhängigen Abstandspufferbereich (136) in Abhängigkeit von der Stellung (118) geregelt wird.

2. Verfahren gemäß Anspruch 1, bei dem als Warnsignal (144) eine sichtbare Anzeige für den Fahrer bereitgestellt wird.

3. Verfahren gemäß einem der vorhergehenden Ansprüche, bei dem als Warnsignal (144) eine Änderung einer Fahrzeugcharakteristik des Fahrzeugs (100) eingestellt wird.

4. Verfahren gemäß Anspruch 3, bei dem als Änderung der Fahrzeugcharakteristik ein Widerstand des Bedienelements (114) erhöht wird.

5. Verfahren gemäß einem der Ansprüche 3 oder 4, bei dem als Änderung der Fahrzeugcharakteristik eine Nichtannahme einer Änderung der Stellung (118) eingestellt wird.

6. Verfahren gemäß einem der vorhergehenden Ansprüche, bei dem die Zielgeschwindigkeit (146) und/oder die Obergrenze (142) überschritten werden, wenn ein Stellungsgradient größer als ein Übertrittwert ist.

7. Verfahren gemäß einem der vorhergehenden Ansprüche, bei dem die Obergrenze (142) in Abhängigkeit von einem Systemzustand des Fahrerassistenzsystems (102) eingestellt wird.

8. Fahrerassistenzsystem (102), wobei das Fahrerassistenzsystem (102) dazu ausgebildet ist, das Verfahren gemäß einem der vorhergehenden Ansprüche in entsprechenden Einrichtungen auszuführen, umzusetzen und/oder anzusteuern.

9. Computerprogrammprodukt, das dazu eingerichtet ist, einen Prozessor bei Ausführung des Computerprogrammprodukts dazu anzuleiten, das Verfahren gemäß einem der Ansprüche 1 bis 7 auszuführen, umzusetzen und/oder anzusteuern.

10. Maschinenlesbares Speichermedium, auf dem das Computerprogrammprodukt gemäß Anspruch 9 gespeichert ist.

## Claims

1. Method for operating a single-track or multitrack vehicle (100) having a driver assistance system (102), wherein a speed (122) of the vehicle (100) and a distance (112) of the vehicle (100) from a vehicle (108) travelling ahead are adjusted, the speed (122) being adjusted within a system-contingent speed range (128) of the driver assistance system (102) by using a position (118) of a control element (114) of the vehicle (100) and being adjusted up to an optional target speed (146) that can be selected within the speed range (128), a warning signal (144) being provided for a driver of the vehicle (100) before an upper limit (142) of the speed range (128) is exceeded, the distance (112) being adjusted in a speed-dependent distance buffer range (136) within the speed range (128) on the basis of the position (118).

2. Method according to Claim 1, in which the warning signal (144) provided for the driver is a visible display.

3. Method according to either of the preceding claims, in which the warning signal (144) that is set is a change in a vehicle characteristic of the vehicle (100).

4. Method according to Claim 3, in which the change in the vehicle characteristic is that a resistance of the control element (114) is increased.

5. Method according to either of Claims 3 and 4, in which the change in vehicle characteristic that is set is non-acceptance of a change in the position (118).

6. Method according to one of the preceding claims, in which the target speed (146) and/or the upper limit (142) are exceeded if a position gradient is greater than a breach value.

7. Method according to one of the preceding claims, in which the upper limit (142) is set on the basis of a system state of the driver assistance system (102).

8. Driver assistance system (102), wherein the driver assistance system (102) is designed to carry out, implement and/or control the method according to one of the preceding claims in corresponding devices.

9. Computer program product configured to instruct a processor to carry out, implement and/or control the method according to one of Claims 1 to 7 when executing the computer program product.

10. Machine-readable storage medium on which the computer program product according to Claim 9 is stored.

## Revendications

1. Procédé permettant de faire fonctionner un véhicule (100) à voie unique ou à voies multiples avec un système d'aide à la conduite (102), dans lequel une vitesse (122) du véhicule (100) et une distance (112) du véhicule (100) par rapport à un véhicule (108) se déplaçant à l'avant sont régulées, dans lequel la vitesse (122) est régulée à l'intérieur d'une plage de vitesses déterminée par le système (128) du système d'aide à la conduite (102) à l'aide d'une position (118) d'un élément de commande (114) du véhicule (100) et est régulée jusqu'à une vitesse cible optionnelle (146) pouvant être sélectionnée à l'intérieur de la plage de vitesses (128), dans lequel, avant qu'une limite supérieure (142) de la plage de vitesses (128) ne soit dépassée, un signal d'avertissement (144) est émis pour un conducteur du véhicule (100), dans lequel la distance (112) est régulée à l'intérieur de la plage de vitesses (128) dans une région tampon de distance (136) dépendant de la vitesse en fonction de la position (118).

2. Procédé selon la revendication 1, selon lequel un affichage visible est émis pour le conducteur en tant que signal d'avertissement (144).

3. Procédé selon l'une des revendications précédentes, selon lequel une modification d'une caractéristique du véhicule (100) est réglée en tant que signal d'avertissement (144).

4. Procédé selon la revendication 3, selon lequel une résistance de l'élément de commande (114) est augmentée en tant que modification de la caractéristique du véhicule.

5. Procédé selon l'une des revendications 3 ou 4, selon lequel une non-acceptation d'une modification de la position (118) est réglée en tant que modification de la caractéristique du véhicule.

6. Procédé selon l'une des revendications précédentes, selon lequel la vitesse cible (146) et/ou la limite supérieure (142) sont dépassées lorsqu'un gradient de position est supérieur à une valeur de dépassement.

7. Procédé selon l'une des revendications précédentes, selon lequel la limite supérieure (142) est réglée en fonction d'un état du système d'aide à la conduite (102).

8. Système d'aide à la conduite (102), dans lequel le système d'aide à la conduite (102) est conçu pour exécuter, mettre en œuvre et/ou commander le procédé selon l'une des revendications précédentes dans des dispositifs correspondants.

9. Produit de programme informatique, qui est conçu pour amener un processeur, lors de l'exécution du produit de programme informatique, à exécuter, mettre en œuvre et/ou commander le procédé selon l'une des revendications 1 à 7.

10. Support de stockage lisible par machine sur lequel est enregistré le produit de programme informatique selon la revendication 9.
